(19) 

Europäisches
Patentamt
European
Patent Office
Office européen
des brevets

(11) **EP 3 617 846 A1**

(12) **EUROPEAN PATENT APPLICATION**

(43) Date of publication:
**04.03.2020 Bulletin 2020/10**

(51) Int Cl.:
**G06F 3/01** *(2006.01)*  **G06T 19/00** *(2011.01)*
**G06F 21/62** *(2013.01)*  **H04L 29/06** *(2006.01)*

(21) Application number: **18191245.2**

(22) Date of filing: **28.08.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Nokia Technologies Oy
02610 Espoo (FI)**

(72) Inventors:
• **TYTGAT, Donny
9860 Oosterzele (BE)**
• **LIEVENS, Sammy
2930 Brasschaat (BE)**

(74) Representative: **Novagraaf Technologies
Bâtiment O2
2, rue Sarah Bernhardt
CS90017
92665 Asnières-sur-Seine Cedex (FR)**

(54) **CONTROL METHOD AND CONTROL APPARATUS FOR AN ALTERED REALITY APPLICATION**

(57)  Method for controlling a multi-user altered reality, AR, application, wherein a reference user has user access rights to at least one AR reference object, the method comprising: determining, for the reference user, at least one relevant user based on a first user relevance criterion; determining, at least one relevant AR object based on a first object relevance criterion; obtaining access rights regarding the at least one relevant user and the at least one relevant AR object; determining a mapping model based on the at least one relevant AR object, the at least one relevant user, and/or the obtained access rights; indicating to the reference user, by means of a perceptual indicator, the access rights regarding the at least one relevant user and at least one relevant AR object based on the determined mapping model; the mapping model being representative for a mapping between obtained access rights and the perceptual indicator.

Fig.2

EP 3 617 846 A1

**Description**

Field of Invention

The field of the invention relates to a control method and control system for an altered reality application. Particular embodiments relate to a control method for controlling a multi-user altered reality application.

Background

The domain of altered reality (AR), more in particular mixed reality (MR), concerns the merging of real and virtual worlds to produce new environments and visualizations where physical and digital objects co-exist and interact in real time. Mixed reality takes place not only in the physical world or the virtual world, but is a mix of reality and virtual reality via immersive technology.

AR or MR devices are typically personal wearables which analyse the real world and augment it with virtual content. Depending on the device, the degree of sensing and world modelling can vary along with the augmentation capabilities. These types of devices are likely to become commonplace in the next few years. It is believed by many that such devices will be the basis for a new type of human-machine interaction model, a model where your world is continuously analysed and crosschecked with the learned knowledge in order to offer a truly transparent human-machine interface which minimizes the need for explicit human-to-machine actions or queries.

Summary

AR applications may consider the adaptation of the real world with virtual objects which can be seen and interacted with by one or more people or users. One could think of a virtual object which is owned by someone, but which object can also be seen and interacted with by other users present in the environment of the person owning the virtual object. Another example might be a virtual alteration of garments of a person which alteration is also visible by other people. Likewise, some virtual object might only be visible to a certain sub-group of people, or even by only one specific person. There may be multiple reasons for this fragmentation of access rights. Privacy concerns might for instance be one reason not to share certain virtual objects with everyone. Cluttering of an AR environment can be another reason for appointing different access rights. When everyone would see all virtual objects of all other people, the perceived reality will become cluttered and lose its effectiveness. It therefore makes sense to only share objects which a person deems relevant to be shared with certain other people. In other words, in the world of AR or MR the perceived reality is not a consistent reality but a personalized reality.

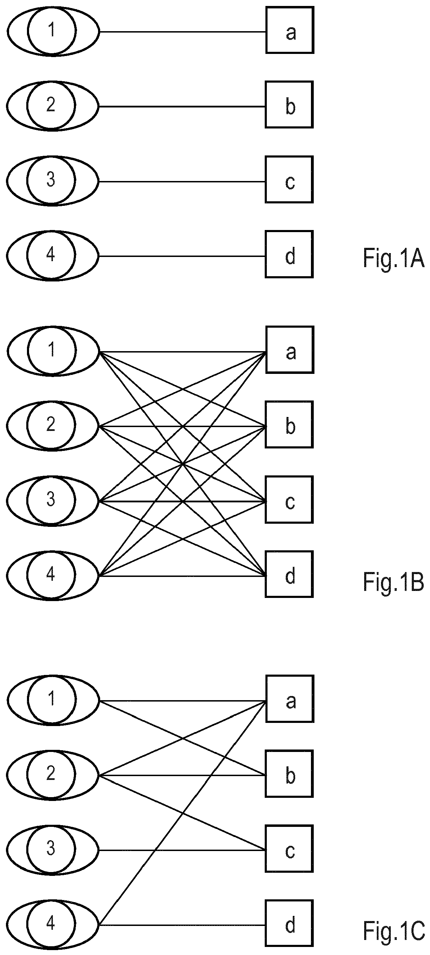

Figure 1 illustrates three different sharing scenarios for an AR application: scenario A, scenario B and scenario C. Scenario A represents a personal AR experience, wherein every user has his/her own AR objects and none of the objects are shared. Scenario B represents a shared AR experience, wherein a consistent altered reality is constructed and every user "sees" the same objects. Scenario C represents a hybrid AR experience which combines the properties of scenarios A and B and wherein some of the objects are shared and some of the objects are personal.

A problem with the hybrid AR experience of scenario C is that a user cannot refer to his/her perceived reality as he/she would in a purely physical world. Perceiving a certain virtual object does not necessarily mean that another user can also perceive that virtual object, which makes it difficult to reference such objects. This might even result in conflicts when for instance a first user has been granted access to a certain privacy-sensitive object while a second user has not been granted access, and when the privacy-sensitive object would be referenced by the first user while it was not known that access was limited.

Prior art technology does not take into account the problems which arise in scenario C since current applications are mostly aimed at use cases employing either fully shared AR reality environments (scenario B), or fully personal AR environments (scenario A). It is believed however that such different cases will blend together which will cause users to combine many use cases at the same time.

The object of embodiments of the present invention is to provide a control method for a multi-user AR application which resolves the above described reference problem. More in particular, the object of embodiments of the present invention is to provide a control method for multi-user AR applications which offer a hybrid AR experience.

According to a first aspect of the present invention there is provided a control method for controlling a multi-user altered reality, AR, application, wherein a reference user has user access rights to at least one AR reference object, the control method comprising:

- determining, for the reference user, from among users of the AR application, at least one relevant user based on at least a first user relevance criterion;
- determining, from among the at least one reference AR objects, at least one relevant AR object based on at least a first object relevance criterion;

- obtaining access rights regarding the at least one relevant user and the at least one relevant AR object;
- determining a mapping model based on at least one of: the at least one relevant AR object, the at least one relevant user, and the obtained access rights; and
- indicating to the reference user, by means of at least one perceptual indicator, the access rights regarding the at least one relevant user and the at least one relevant AR object based on the determined mapping model; wherein the mapping model is representative for a mapping between the obtained access rights and the at least one perceptual indicator.

Embodiments of the present invention are based *inter alia* on the insight that access rights regarding one or more relevant users and one or more relevant AR objects may be indicated to a reference user by means of one or more perceptual indicators. In this manner, the reference user is made aware of which relevant objects are shared, and which relevant users have access to the relevant objects. Consequently, the reference user is aware of which relevant objects may be referred in relation to a particular relevant user, and which relevant objects cannot be referred in relation with the particular relevant user. Depending on the specific AR application the mapping model may be determined such that the perceptual indicator can be interpreted by the reference user in a simple manner and such that the reference user remains immersed in the AR application. Furthermore, relevant users and/or relevant AR objects may be determined in various manners depending on the AR application. Relevant users and relevant AR objects may be defined as users of the AR application and AR objects, respectively, with which users and AR objects the reference user may interact.

The conflicts as described above which may arise using prior art solutions are resolved by the described control method by giving an adaptive indication to a AR reference user regarding the visibility and/or accessibility of AR objects in relation to other user. As such, with the provided control method, it is clear to the relevant user which AR objects are personal, which AR objects are shared among certain users and which are public.

In an embodiment, determining at least one relevant user comprises obtaining object access rights of the at least one relevant AR object, wherein the object access rights are representative for users having access to the respective relevant AR object; and determining that a user is a relevant user if the user has access to the respective relevant AR object.

In this manner, determining whether a user is a relevant user is done based on whether the user has access to any one of the relevant AR objects which are visible to the reference user. Users who have no access to any one of the relevant AR objects are thereby determined to be non-relevant users for the reference user, i.e. no interaction is to be expected between the reference user and a user who has no access to any one of the relevant AR objects which are accessible by the reference user.

In another embodiment, determining at least one relevant AR object comprises obtaining user access rights of the at least one relevant user, wherein the user access rights are representative for AR reference objects which can be accessed by the respective relevant user; and determining that an AR reference object is a relevant AR object if the AR reference object can be accessed by the respective relevant user.

In this manner, determining whether an AR object is a relevant AR object is done based on whether the AR object can be accessed by any one of the relevant users with who the reference user may interact. Objects which cannot be accessed by any one of the relevant users are thereby determined to be non-relevant AR objects for the reference user.

In a further embodiment, determining the at least one relevant user comprises determining a plurality of relevant users, and obtaining access rights comprises obtaining user access rights of each relevant user of the plurality of relevant users. Determining the mapping model comprises determining at least one user group by grouping each relevant user of the plurality of relevant users in a corresponding user group based on the user access rights of the respective relevant user; and the mapping model is representative for a mapping between the at least one user group and the at least one perceptual indicator.

In this manner, each one of the at least one perceptual indicator represents a corresponding user group. This is particularly beneficial when the amount of relevant users is relatively high as compared to the amount of relevant AR objects.

In a further embodiment, grouping relevant users in a corresponding user group comprises grouping relevant users having the same user access rights in the same user group.

In this manner, each one of the at least one perceptual indicator represents a corresponding user group of users having the same user access rights, i.e. the users can access the same relevant AR objects. Moreover, one perceptual indicator may be used to represent an entire group of relevant users and their corresponding user access rights. In this manner the amount of perceptual indicators may be reduced which will improve user experience and immersiveness of the relevant user.

In an alternative embodiment, grouping relevant users in a corresponding user group comprises grouping a relevant user in a first user group when the respective relevant user has access to each relevant AR object, and grouping the respective relevant user in a second group when the respective relevant user has no access to at least one relevant AR object.

In this manner, a binary grouping of relevant users and a corresponding binary perceptual indicator may be provided. Such binary perceptual indicator is easy to interpret by the reference user which improves user experience and immersiveness of the reference user in the AR application.

In an embodiment, determining the at least one relevant AR object comprises determining a plurality of relevant AR objects, and obtaining access rights comprises obtaining object access rights of each relevant AR object of the plurality of relevant AR objects. In such embodiment, determining the mapping model comprises determining at least one object group by grouping each relevant AR object of the plurality of relevant AR objects in a corresponding object group based on the object access rights of the respective relevant AR object; and the mapping model is representative for a mapping between the at least one object group and the at least one perceptual indicator.

In this manner, each one of the at least one perceptual indicator represents a corresponding object group. This is particularly beneficial when the amount of relevant AR objects is relatively high as compared to the amount of relevant users.

In a further embodiment, grouping relevant AR objects in a corresponding object group comprises grouping relevant AR objects having the same object access rights in the same object group.

In this manner, each one of the at least one perceptual indicator represents a corresponding object group of AR objects having the same object access rights, i.e. the AR objects can be accessed by the same relevant users. Moreover, one perceptual indicator may be used to represent an entire group of relevant AR objects and their corresponding object access rights. In this manner the amount of perceptual indicators may be reduced which will improve user experience and immersiveness of the relevant user.

In an alternative embodiment, grouping relevant AR objects in a corresponding object group comprises grouping a relevant AR object in a first object group when each relevant user has access to the relevant AR object, and grouping the respective relevant AR object in a second group when at least one relevant user has no access to the respective relevant AR object.

In this manner, a binary grouping of relevant AR objects and a corresponding binary perceptual indicator may be provided. Such binary perceptual indicator is easy to interpret by the reference user which improves user experience and immersiveness of the reference user in the AR application.

In an exemplary embodiment, the at least one perceptual indicator comprises at least one of: a visual indicator, an auditory indicator, and a tactile indicator.

In this manner, access rights of relevant users and/or relevant AR objects may be indicated to the reference user in various ways. Depending on the specifics of the particular AR application a visual indicator, auditory indicator, tactile indicator or any combination thereof may be used to provide the reference user with an indicator which has no or only limited impact on the immersiveness of the reference user in the AR application. In addition, depending on the specifics of the particular AR application a suitable indicator can be used which is easy to interpret by the reference user.

In an embodiment, the first user relevance criterion comprises at least one of: a distance between the respective user and the reference user, a user access right of the respective user, a relation of the respective user to the reference user, and a probability of interaction between the respective user and the reference user.

In this manner, relevant users for the reference user may be determined from amongst the users of the AR application to reduce the amount of relevant users for which user access rights should be determined and indicated to the reference user. This may reduce computational costs and lower the complexity of the mapping model and/or the at least one perceptual indicator.

In an embodiment, the first object relevance criterion comprises at least one of: a distance between the respective AR object and the reference user, an object access right of the AR object, a relation of the respective AR object to the reference user, and a probability of interaction between the reference user and the respective AR object.

In this manner, relevant AR objects for the reference user may be determined from amongst the reference AR objects to reduce the amount of relevant AR objects for which object access rights should be determined and indicated to the reference user. This may reduce computational costs and lower the complexity of the mapping model and/or the at least one perceptual indicator.

In a further developed embodiment, the user access rights comprise at least one of: see, read, interact, write, delete, and change.

In this manner, user access rights are not limited to a user having rights to see a particular AR object, but depending on the particularities of the AR application, the user may have rights to interact with an AR object or change the AR object etc. The particular nature of the user access rights, i.e. read, write, change, etc., can be represented by the at least one perceptual indicator such that all information regarding user access rights is indicated to the reference user. In other words the at least one perceptual indicator does not only indicate to the reference user whether a relevant user has user access rights to a relevant AR object, but also specifies which user access right(s) the relevant user has to the relevant AR object.

According to another aspect of the present invention, there is provided a control system for controlling a multi-user altered reality, AR, application, wherein a reference user has user access rights to at least one AR reference object, the control system comprising:

- means for determining, for the reference user, from among users of the AR application, at least one relevant user based on at least a first user relevance criterion;
- means for determining, from among the at least one reference AR objects, at least one relevant AR object based on at least a first object relevance criterion;
- means for obtaining access rights regarding the at least one relevant user and the at least one relevant AR object;
- means for determining a mapping model based on at least one of: the at least one relevant AR object, the at least one relevant user, and the obtained access rights; and
- means for indicating to the reference user, by means of at least one perceptual indicator, the access rights regarding the at least one relevant user and the at least one relevant AR object based on the determined mapping model;

wherein the mapping model is representative for a mapping between the obtained access rights and the at least one perceptual indicator.

It will be understood by the skilled person that the features and advantages disclosed hereinabove with respect to various embodiments of the control method may also apply, *mutatis mutandis*, to various corresponding embodiments of the control system.

According to yet another aspect of the present invention, there is provided a computer program product comprising a computer-executable program of instructions for performing, when executed on a computer, the steps of the method of any one of the method embodiments described above.

It will be understood by the skilled person that the features and advantages disclosed hereinabove with respect to embodiments of the control method may also apply, *mutatis mutandis,* to embodiments of the computer program product.

According to yet another aspect of the present invention, there is provided an apparatus for controlling a multi-user altered reality, AR, application, wherein a reference user has user access rights to at least one AR reference object, the apparatus comprising at least one processor and at least one memory including computer program code, wherein the at least one memory and the computer program code is configured to, with the at least one processor, cause the apparatus at least to perform:

- determining, for the reference user, from among users of the AR application, at least one relevant user based on at least a first user relevance criterion;
- determining, from among the at least one reference AR objects, at least one relevant AR object based on at least a first object relevance criterion;
- obtaining access rights regarding the at least one relevant user and the at least one relevant AR object;
- determining a mapping model based on at least one of: the at least one relevant AR object, the at least one relevant user, and the obtained access rights; and
- indicating to the reference user, by means of at least one perceptual indicator, the access rights regarding the at least one relevant user and the at least one relevant AR object based on the determined mapping model;

wherein the mapping model is representative for a mapping between the obtained access rights and the at least one perceptual indicator.

It will be understood by the skilled person that the features and advantages disclosed hereinabove with respect to embodiments of the control method may also apply, *mutatis mutandis*, to embodiments of the apparatus.

Further aspects of the present invention are described by the dependent claims. The features from the dependent claims, features of any of the independent claims and any features of other dependent claims may be combined as considered appropriate to the person of ordinary skill in the art, and not only in the particular combinations as defined by the claims.

Brief description of the figures

The accompanying drawings are used to illustrate presently preferred non-limiting exemplary embodiments of devices of the present invention. The above and other advantages of the features and objects of the present invention will become more apparent and the present invention will be better understood from the following detailed description when read in conjunction with the accompanying drawings, in which:

Figure 1 schematically illustrates three different sharing scenarios for an AR application;
Figure 2 is a flowchart of an exemplary embodiment of a control method for a multi-user AR application;
Figures 3A and 3B are flowcharts of further exemplary embodiments of a control method for a multi-user AR application;

Figure 4 schematically illustrates a flowchart of an embodiment of a control method for a multi-user AR application;
Figure 5 schematically illustrates the concepts of a mapping model and perceptual indicators according to an embodiment of the control method;
Figure 6 schematically illustrates the concepts of a mapping model and perceptual indicators according to an alternative embodiment of the control method;
Figure 7 schematically illustrates the concepts of a mapping model and perceptual indicators according to yet another embodiment of the control method;
Figure 8 mathematically illustrates the embodiment according to Figure 7; and
Figure 9 schematically illustrates an exemplary embodiment of a control system for an AR application.

Description of embodiments

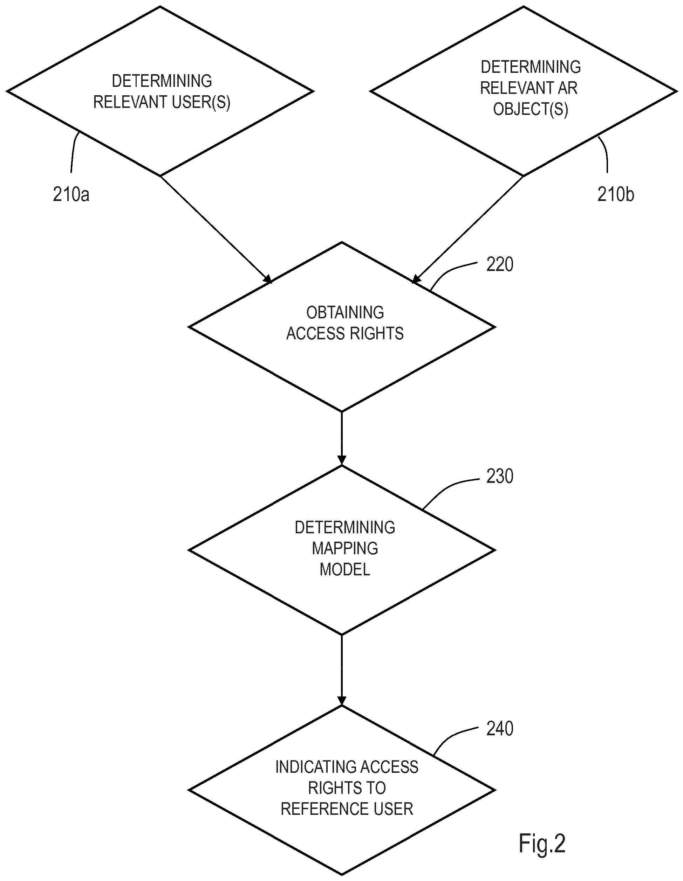

Figure 2 illustrates a control method for controlling a multi-user altered reality, AR, application. In such an AR application a reference user has user access rights to at least one AR reference object. User access rights for the reference user may comprise any one of the right to see, read, interact, write, delete, and change a reference AR object. Similarly, a reference AR object may have object access rights which comprise any one of the right to be seen, read, interacted with, written, deleted, and changed by the reference user. The reference user is this context refers to a "central user" using the AR application, while reference AR objects are AR objects which are at least visible to the reference user. The reference user may encounter in the AR environment of the AR application other users of the AR application, and these other users may or may not see (all of) the reference AR objects.

The control method of figure 2 comprises step 210a of determining, for the reference user, from among other users of the AR application, at least one relevant user based on at least a first user relevance criterion. Depending on the AR application all users of the AR application may be determined to be relevant users, or only a subset or singleton of the users of the AR application may be considered to be relevant users. The first user relevance criterion may be any one of a distance between the respective user and the reference user, a user access right of the respective user, a relation of the respective user to the reference user, a probability of interaction between the respective user and the reference user or any combination thereof.

The control method further comprises step 210b of determining, from among the at least one reference AR objects, at least one relevant AR object based on at least a first object relevance criterion. Depending on the AR application all reference AR objects may be determined to be relevant AR objects, or only a subset or singleton of the reference AR objects may be determined to be relevant AR objects. The first object relevance criterion may be any one of a distance between the respective AR object and the reference user, an object access right of the AR object, a relation of the respective AR object to the reference user, a probability of interaction between the reference user and the respective AR object or any combination thereof.

The control method further comprises step 220 of obtaining access rights regarding the relevant user(s) and the relevant AR object(s). The general wording access rights comprises user access rights and/or object access rights. User access rights are representative of the rights that a particular user has to access one or more AR objects. Object access rights are representative of the rights that a particular AR object has to be accessed by one or more users of the AR application. The control method is not concerned with actual determining or defining the actual access rights of a user and/or AR object. These access rights are AR application specific and are considered to be available to the control method.

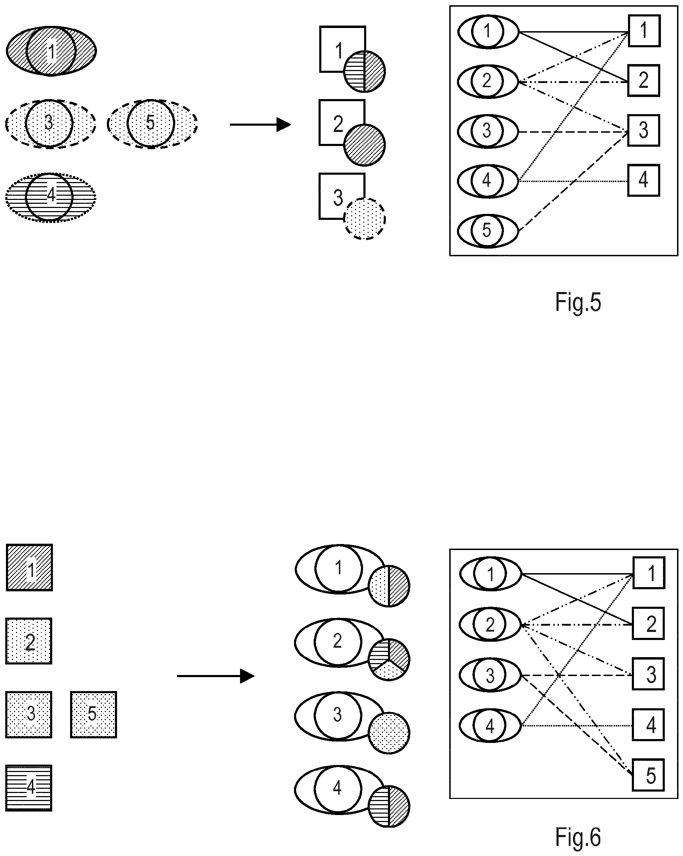

The control method further comprises step 230 of determining a mapping model based on the relevant AR object(s), the relevant user(s), the obtained access right(s), or any combination thereof, and step 240 of indicating to the reference user, by means of at least one perceptual indicator, the access rights regarding the relevant user(s) and the relevant AR object(s) based on the determined mapping model. The mapping model is representative for a mapping between the obtained access rights and the at least one perceptual indicator. In the context of the AR application, the mapping model may be considered to correspond with a mental model which is representative for an interpretation effort made by the reference user to interpret and/or understand the perceptual indicator, i.e. to determine from the perceptual indicator which access rights it represents. The perceptual indicator may be any one of a visual indicator, an auditory indicator, a tactile indicator or any combination thereof. In addition the perceptual indicator may indicate user access rights, object access rights or a combination thereof. This will be further elaborated with reference to figures 5, 6 and 7.

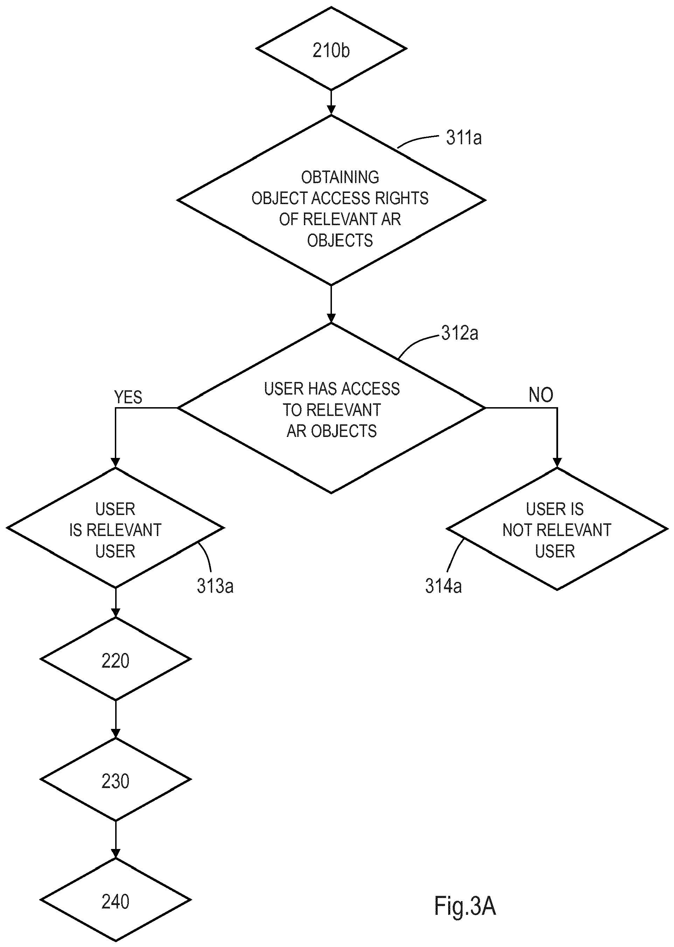

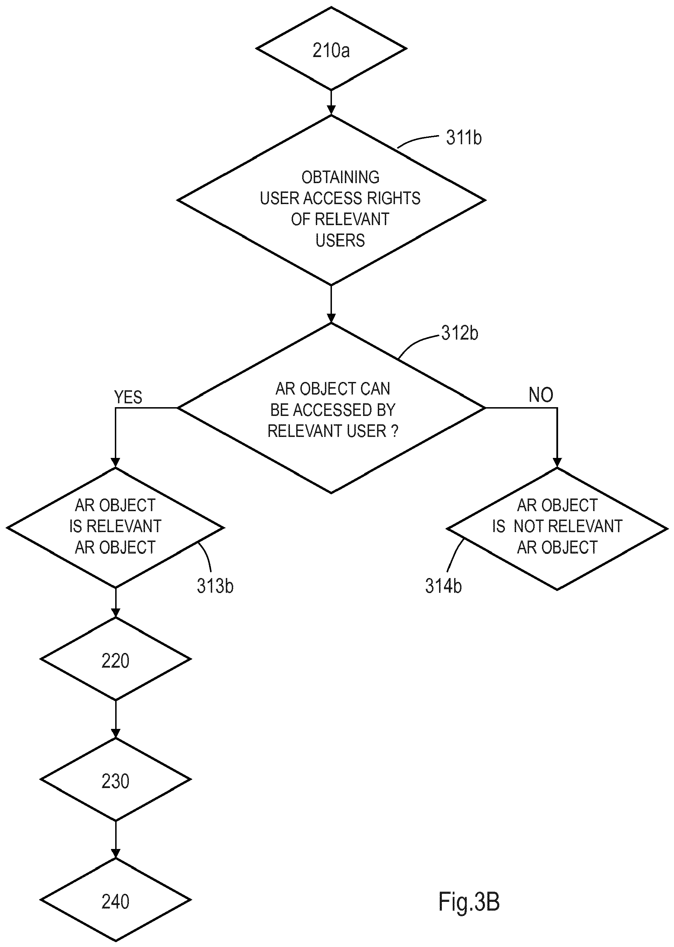

Although steps 210a and 210b are illustrated as separate steps in figure 2, step 210b may be used to perform step 210a and vice versa. This is illustrated in figure 3A and 3B, respectively.

In figure 3A step 210b of determining relevant AR objects based on a first object relevance criterion, e.g. distance between the respective AR reference object and the reference user, is executed. Consequently, in step 311a object access rights of the relevant AR objects are obtained, wherein the object access rights are representative for users having access to the respective relevant AR object. In step 312a it is checked whether a particular user has access to the respective relevant AR object and in step 313a it is determined that the particular user is a relevant user when the particular user has access to the respective relevant AR object. On the contrary, if the particular user has no access to the respective relevant AR object, the particular user is determined not to be a relevant user in step 314a. In this manner, both the relevant AR objects and the relevant users are determined, wherein the relevant users are determined based on the object access rights of the relevant AR objects. Further to step 313a, steps 220, 230 and 240 as described in combination with figure 2 may be performed.

In figure 3B step 210b of determining relevant users based on a first user relevance criterion, e.g. distance between the respective user and the reference user, is executed. Consequently, in step 311b user access rights of the relevant users are obtained, wherein the user access rights are representative for reference AR objects which can be accessed by the respective relevant user. In step 312b it is checked whether a particular AR object can be accessed by the respective relevant user and in step 313b it is determined that the particular AR object is a relevant AR object when the particular AR object can be accessed by the respective relevant user. On the contrary, if the particular AR object cannot be accessed by the respective relevant user, the particular AR object is determined not to be a relevant AR object in step 314b. In this manner, both the relevant AR objects and the relevant users are determined, wherein the relevant AR objects are determined based on the user access rights of the relevant users. Further to step 313b, steps 220, 230 and 240 as described in combination with figure 2 may be performed.

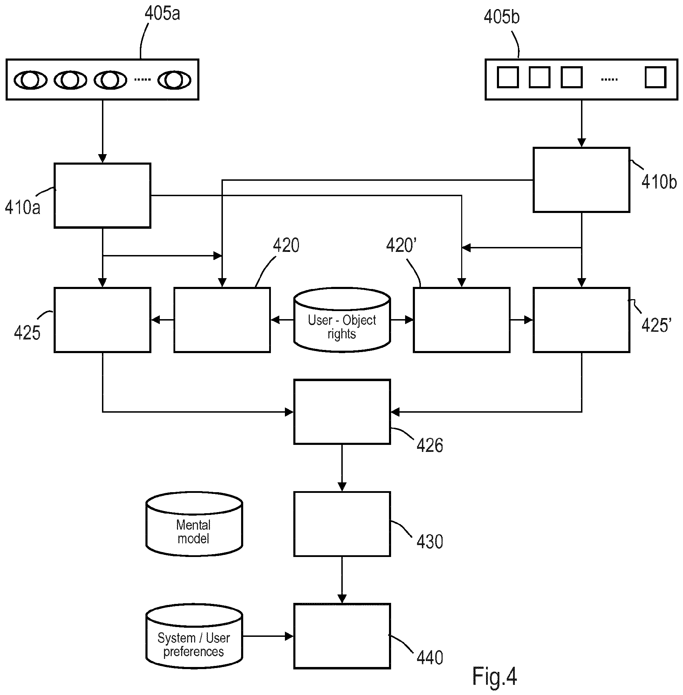

Figure 4 illustrates an overall outline of an embodiment of a control method for a multi-user AR application. In steps 405a and 405b AR users ($\{P_1,P_2,P_3...P_n\}$) and AR objects ($\{O1,O2,O3...On\}$) are used as input to the control method, wherein one specific user is tagged as the reference user. This reference user is the user for which the perceptual indicator(s) will be determined. The considered AR objects are objects which are accessible by the reference user and are therefore referred to as reference AR objects.

Step 410a is concerned with selecting the relevant users ($\{P_2,P_3...P_n\}$) for the specific context determined by the reference user and/or the AR application. This selection may be based on a varied number of parameters, also referred to as user relevance criterion(s). An example would be to only keep the users that are within a certain distance from the reference user. AR devices typically have a form of spatial awareness which is required for AR to work correctly. From this spatial awareness a distance metric can be derived. In a similar manner, step 410b is concerned with selecting the relevant AR objects ($\{O_2,O_3...O_n\}$) for the specific context determined by the reference user and/or the AR application. As an example, only the AR objects that are in within a certain distance from the reference user will be determined to be relevant AR objects.

After determining the relevant users and/or the relevant AR objects, relevant users and/or relevant AR objects may be grouped in corresponding user groups ($\{\{P_1,P_4\},\{P_2,P_{n-1}\}...\}$) and/or object groups ($\{\{O_2\},\{O_2,O_3\}...\}$) based on a similarity in user and object access rights, respectively. In the embodiment of figure 4, this is carried out for the relevant users in step 425 after obtaining the corresponding user access rights ($\{O'(P_2), O'(P_3)...O'(P_n)\}$) in step 420, and for the relevant AR objects in step 425'after obtaining the corresponding object access rights ($\{P'(O_2), P'(O_3)...P'(O_n)\}$) in step 420'. The access rights are considered to be available to the control method.

In figure 4 user access rights are depicted by the function $O(p)$ and this function returns the list of AR objects and the access rights that the user p has for this AR object. Step 420 will output the list of relevant AR objects ($\{O'(P_2), O'(P_3)...O'(P_n)\}$) which can be accessed by each of the relevant users. This is denoted by a list of O'(p) functions for the relevant users, wherein O'(p) is similar to O(p) where the list of objects is restricted to the relevant AR objects.

Step 425 will then group the relevant users along with their user access rights for certain AR objects ($\{\{P_1,P_4\},\{P_2,P_{n-1}\}...\}$). For example, a user group denoted $(p_1,p_4)$ means that users $p_1$ and $p_4$ have similar user access rights for the relevant objects. In the embodiment of figure 4, the users belonging to the same user group will be processed together, as they will be considered equal within this context.

At the AR object side, steps 420' and 425' provide similar functionality as compared to the steps 420 and 425 as described but in the context of AR objects. In other words, AR objects having similar object access rights are grouped in object groups($\{\{O_2\},\{O_2,O_3\}...\}$), wherein the AR objects in the same object group can be access by the same group of relevant users.

The determined user groups and object groups are then gathered in step 426 where they are correlated with the available access rights. For each of the user groups, the object access rights are determined for the AR objects that are in each of the object groups, and vice versa. In this manner the user groups and object groups are preserved as the requirement to be grouped in this embodiment meant that the access rights are consistent throughout the user/object group. Step 426 results in a list of pairwise access groups ($\{\{p_1,p_4\}<>\{o_2\}, \{p_1,p_4\}<>\{o_2,o_1\}\{p_2,p_{n-1}\}<>\{o_2,o_1\},...\}$).

In step 430 a mapping model is determined based on the previously obtained information, i.e. relevant users, relevant AR objects, and/or their corresponding access rights. The mapping model provides a link between perceptual indicators which will be determined in step 440 and the relevant users, relevant AR objects and/or their corresponding access rights. In other words, the mapping model is related to an AR application-specific mental model. In the embodiment of figure 4, such a mental model comprises an application-specific set of rules in order to link user groups and object groups in a way that is consistent and understandable for the reference user. The output of step 430 is a list of entities (user groups and/or object groups) ($\{\{o_2\} :: \{p_1,p_4\}\}, \{o_2,o_1\} :: \{\{p_1,p_4\}, \{p_2,p_{n-1}\}\},...\}$) which will be provided with a perceptual indicator. Each of these entities may be accompanied with a property that allows for creating this perceptual indicator. Such a property can for example be a group of relevant users or AR objects, but alternatively also a more abstract property such as a binary value indicating whether relevant AR object is seen by each of the relevant users or not.

In step 440 the perceptual indicator is determined. Reference user preferences may be taken into account in order to determine the perceptual indicator. A reference user might for instance have a standard colour to assign to a certain user group (e.g. family, friends, colleagues, etc.) that can be reflected by the perceptual indicator. For example user group $\{P_1,P_2\}$ may be linked to one color, a user group $\{P_3, P_{n-1}\}$ may be linked to another color.

In this manner a perceptual indicator is provided to the reference user regarding the shared reality status of each the reference AR objects. In addition, the perceptual indicator may adapt to the AR environment of the reference user in order to make the perceptual indicator both indicative for the reference user and adequately simple to interpret.

The interpretation effort that may be required to use the perceptual indicator is referred to as the mental model. This mental model encompasses the rules that are needed to interpret the perceptual indicator and translate it into the shared reality status of each of the AR objects. This corresponds with the mapping model which provides a mapping between the perceptual indicator and the access rights which are indicated by the perceptual indicator. Preferably the mental model is as light as possible given a certain context because this will allow for an easy adaptation of the control method and make the interface to the reference user as transparent as possible, wherein transparency is meant here as the invisibility of the control method, control system or interfaces thereof).

The perceptual indicator is a perceivable entity that provides the reference user with the necessary information to allow him or her to regress this information with his or her mental model. This indicator can for example be a visual icon that accompanies relevant AR objects or a certain visual style that is applied to relevant AR objects. Alternatively the perceptual indicator could be an indicator in any other modality than the visual domain. One could for instance use an indicator that mutes audio from a AR object when a relevant user has no access to this object, or exhibit certain haptic feedback when the control method detects a potential interaction with an AR object, e.g. via artificial intelligence (AI) based prediction, whilst it cannot be consistently experienced among the other users.

Figures 5-8 illustrate a number of case-specific embodiments of the control method of figure 2 and/or figure 4, wherein different mapping models are determined based on the specifics of the AR application, the amount of relevant users, the amount of relevant AR objects, or a combination thereof. In correspondence with the different mapping models, different perceptual indicators will be illustrated. Please note however, that these embodiments are purely illustrative and in no way may be considered to be limiting to the control method and control system as described. Following embodiments will be illustrated from the view of the reference user.

Figure 5 illustrates an embodiment employing object-centric perceptual indicators which refer to user groups. Relevant users are grouped in a number of user groups, wherein the users in a particular user group have the same user access rights with respect to the reference AR objects. These groups may correspond with a type of relationship the reference user has with the relevant users. There might for example be a group corresponding to close family, another one corresponding to colleagues, etc. These different user groups may have similar types of access rights and can therefore also be used to group users into logical groups.

In figure 5, "user 2" is assumed to be the reference user in this case. In addition three user groups are determined: a singleton group with "user 1", a group with "user 3" and "user 5" and another singleton group with "user 4". Each user in a particular group has the same access rights for the reference AR objects. The reference user has access to "object 1", "object 2" and "object 3", and these AR objects are therefore considered to be reference AR objects. The access rights are then analysed for these reference AR objects and an indicator is constructed to reflect these access rights from the different groups. In figure 5, a perceptual indicator is coupled to each reference AR objects and comprises a circle which corresponds with one ore more user groups having access rights to the respective reference AR object. Note that this is just one exemplary choice for a visual indicator, and that the skilled person is aware of many other perceptual indicators, both in the visual domain and in other perceptual modalities.

Referring back to figure 2 and 4, this embodiment will use for example proximity as a user relevance and/or object relevance criterion for determining the relevant users and relevant AR objects in steps 210a, 410a and 210b, 410b. Access rights of the relevant users are obtained in step 220, 420, 420' and the users are grouped based on the user access rights in step 425. The user groups are then used as a primitive for the mapping model, see step 230, 430 and the perceptual indicators, see step 240, 440. More in particular an object-centric mapping model is determined in step 230, 430 wherein for each of the relevant AR objects a list of user groups having access rights for said relevant AR object is determined. Finally, in step 240, 440 a perceptual indicator is created for each one of the relevant AR objects, wherein the perceptual indicator indicates which users or user groups have access to the respective AR object.

Note that in this approach the reference user is expected to link a certain perceptual property, e.g. colour, to a certain user group. In scenarios where users can be split into groups according to a well-known rule, i.e. well known to the reference user, and where the number of user groups is limited, this approach is particularly suitable. The mapping model and mental model of this approach correspond with relating a certain colour to close family, another colour to colleagues, etc. However, when user groups are more dynamic, the number of user groups becomes large, and/or when access rights are assigned in a more diverse or personal manner, following embodiments of the control method may be beneficial.

Figure 6 illustrates an embodiment employing user-centric perceptual indicators which refer to object groups. Relevant AR objects are grouped in a number of object groups, wherein the AR objects in a particular object group have the same object access rights with respect to the relevant users. This embodiment may be preferred when the number of objects or objects groups is small enough and stable, while on the other hand the relevant users are a diverse group of users contrary to the embodiment of figure 5. AR objects are divided into object groups wherein each AR object in a particular group has the same type of object access rights. In this case, it might be beneficial to employ a user-centric perceptual indicator. A quick observation of the perceptual indicator of a relevant user will indicate to the reference user which object or object groups that particular relevant user has access to.

In addition, or alternatively a hybrid approach between the embodiment of figure 5 and the embodiment of figure 6 is possible wherein both relevant users and relevant AR objects are grouped. A perceptual indicator will then link the user groups to the object groups. Whether this perceptual indicator would then be user-centric, object-centric or both, depends on the particularities of the AR application and/or preferences of the reference user.

Referring back to figure 2 and 4, this embodiment will use for example proximity as a user relevance and/or object relevance criterion for determining the relevant users and relevant AR objects in steps 210a, 410a and 210b, 410b. Access rights of the relevant AR objects are obtained in step 220, 420, 420' and the relevant AR objects are grouped based on the object access rights in step 425'. The object groups are then used as a primitive for the mapping model, see step 230, 430 and the perceptual indicators, see step 240, 440. More in particular a user-centric mapping model is determined in step 230, 430 wherein for each of the relevant users a list of object groups having access rights for said relevant user is determined. Finally, in step 240, 440 a perceptual indicator is created for each one of the relevant users, wherein the perceptual indicator indicates which AR objects or objects groups can be access by the respective relevant user.

The embodiments of figure 5 and figure 6 may be beneficial when the relevant users can be easily split in user groups, or the relevant AR objects can be easily split in object groups, respectively. However, when this is not possible, the illustrated embodiment may become more complex to manage and the mental model may become too large because a reference user would need to memorize too many relations or mappings between a perceptual indicator and the access rights of the users and/or AR objects which are represented by the perceptual indicator.

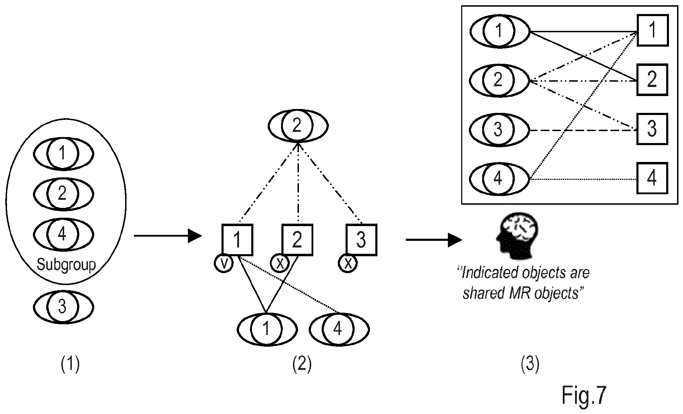

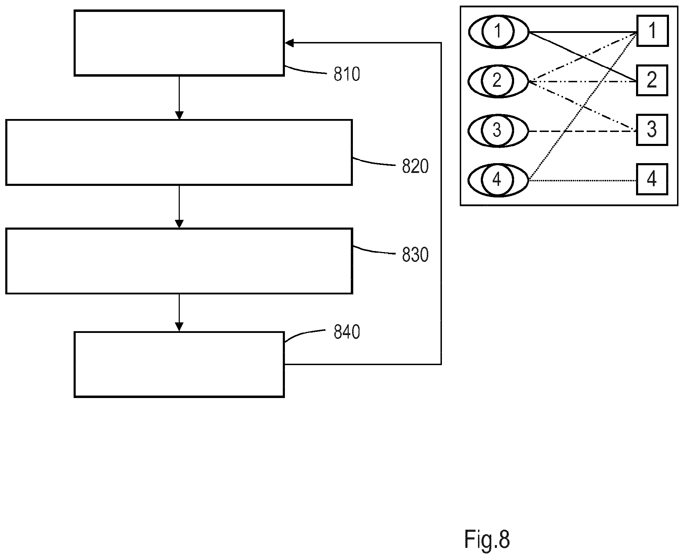

An alternative embodiment is illustrated in figures 7 and 8. In this embodiment a smaller sub-group of relevant users is created which allows for a less complex mapping model to be determined for this sub-group. This sub-group of relevant users may for example be based on a second user relevance criterion, in addition to a first user relevance criterion. In the embodiment of figure 7(1) one or more appropriate sub-groups are determined dynamically by estimating with which relevant users the reference user is in a conversation with. From this sub-group of users, rules of the mapping model or mental modal may be simplified dramatically, since a typical sub-group will comprise typically a limited amount of relevant users, and have a similar conversational topic which would be mutual to all relevant users in the sub-group. As such, only the relevant AR objects which are accessible all relevant users in the sub-group, would require a perceptual indicator since these relevant AR objects are the only AR objects that might be the topic of a mutual conversation between the relevant users in the sub-group. In figure 7 (2), such mutual AR objects are marked with a checkmark V, while the other AR objects are marked with a cross X. In this embodiment the perceptual indicator is binary and can be represented by a simple icon. Alternatively the perceptual indicator may be established in a different manner of rendering the AR objects, e.g. the AR objects which are not mutually shared are rendered in a transparent manner. The applicable mental model is now easier to interpret as it can be reduced to "the indicated AR objects are mutually shared AR objects" as illustrated in figure 7(3), whereas the other AR objects might be fully private, or can only be accessed by a subset of the sub-group of relevant users.

Figure 8 illustrates mathematically how the embodiment of figure 7 determines, for a reference user $p_2$, the relevant AR objects which are either fully shared, or not. In the following, following definitions may be used in regard of the situation as described in figure 7:

$$O(p) := \text{objects accessible by entity/person p;}$$

$$O(p1) = \{o1, o2\};$$

$$O(p2) = \{o1, o2, o3\};$$

$$O(p3) = \{o3\};$$

$$O(p4) = \{o1,o4\}.$$

$$P(o) := \text{entities/persons that have access to object o;}$$

$$P(o1) = \{p1,p2,p4\};$$

$$P(o2) = \{p1,p2\};$$

$$P(o3) = \{p2,p3\};$$

$$P(o4) = \{p4\}.$$

In step 810, an active sub-group of relevant users $G(P_2) = \{P_1,P_2,P_4\}$ is determined for user $p_2$. Determination of such a sub-group can be based on different parameters and/or of sensors in order to make the best possible estimate. In an exemplary approach proximity may be used in order to group the relevant users. In addition, other methods may be used to further refine the determined of the sub-group. An example of such a method is AI-driven video analytics which analyses the actions of users based on video inputs, and which classifies such actions in order to refine the user sub-group.

In step 820 an intersection $P(p_2,o) = (P(O) \cap G(P_2)$ is created between the users $P(O)$ which have access to the reference AR objects and the users in the sub-group $G(P_2)$. As such, a list of per-object mappings is created $P(p2)$ = $\{P(_{P2},o_1): \{P_1,P_2,P_4\}, P(p_2,o_2): \{P_1,P_2\}, P(p_2,o_3): \{P_2\}$ \}which is then classified in step 830 as "complete" or "incomplete" in respect to the users in the sub-group. The "complete" sets may be understood as $S(p_2):=(o : o \in O(P_2)$ and $|P(p_2,o)| = |G(_{P2})|)$ whereas the "incomplete" sets may be understood as $U(p_2) :=(o : o \in O(P_2)$ and $|P(p_2,o)| <> |G(p_2)|)$. In step 840 the AR objects relating to a complete set will be annotated with a different perceptual indicator as compared to the AR objects relating to an incomplete set. Alternatively, only one of the two AR object categories may receive a perceptual indicator. This depends on the particularities of the AR application.

The embodiment of figures 7 and 8 may be particularly beneficial in AR applications having diverse sets of users and AR objects. The entities, i.e. users and/or AR objects, do not need to be groupable based on their corresponding access rights. This embodiment applies a binary approach which is enabled by reducing the set of entities to merely the relevant ones based on one or more relevance criterions.

Referring to figure 2 and 4, the embodiment of figures 7 and 8 may use proximity for determining the relevant objects and use a higher-level conversation metric, i.e. additional user relevance criterion, for determining the relevant users in a relevant sub-group. An object-centric mapping model is then determined, with a binary property that states whether all relevant users in the sub-group have access to a particular AR object or not. A perceptual indicator is then created for each of the relevant AR objects which reflects this binary property.

In the above, the wording "access rights" has been used for the sake of simplicity. Access rights may be interpreted in different ways depending on the capabilities and properties of the respective AR object. A user could have a right to see an AR object, a right to interact with the AR object or a right to apply a persistent change to the AR object. Depending on the AR application, access rights might be grouped with respect to the perceptual indicator. For instance, it might not be important in a certain AR application to be able to distinguish "read" access rights, i.e. seeing the AR object, from "write" access rights, i.e. applying a persistent change to the AR object. In the latter case, the illustrated embodiments may be applied using groups of access rights rather than individual access rights. In this manner it would not be conveyed to the reference user which exact access right is available, but only that an access right is available. In alternative embodiments however, it may be important to distinguish between at least some of the access rights. In the latter case, user groups and/or object groups may be created with the additional access rights property. As such, such a "read user group" could be differentiated from a "write user group" and be represented as such in the perceptual indicator(s).

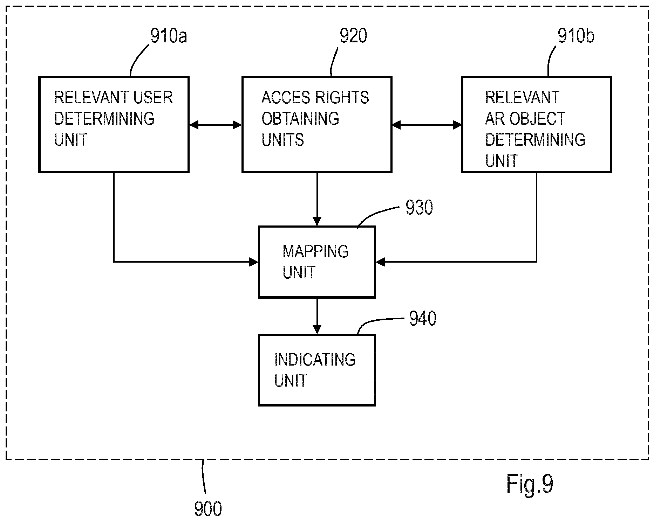

Figure 9 illustrates a control system 900 for controlling a multi-user altered reality, AR, application, wherein a reference user has user access rights to at least one AR reference object. The control system 900 comprises a relevant user determining unit 910a configured for determining, for the reference user, from among users of the AR application, at least one relevant user based on at least a first user relevance criterion. The control system 900 further comprises a relevant AR object determining unit 910b configured for determining, from among the at least one reference AR objects, at least one relevant AR object based on at least a first object relevance criterion; and an access rights obtaining unit 920 configured for obtaining access rights regarding the at least one relevant user and the at least one relevant AR object. The control system 900 further comprises a mapping unit 930 configured for determining a mapping model based on at least one of: the at least one relevant AR object, the at least one relevant user, and the obtained access rights. The control system 900 of figure 9 further comprises an indicating unit 940 configured for indicating to the reference user, by means of at least one perceptual indicator, the access rights regarding the at least one relevant user and the at least one relevant AR object based on the determined mapping model. The mapping model is representative for a mapping between the obtained access rights and the at least one perceptual indicator.

It will be understood by the skilled person that the features and advantages disclosed hereinabove with respect to various embodiments and figures of the control method may also apply, *mutatis mutandis*, to various corresponding embodiments of the control system.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The program storage devices may be resident program storage devices or may be removable program storage devices, such as smart cards. The embodiments are also intended to cover computers programmed to perform said steps of the above-described methods.

The description and drawings merely illustrate the principles of the present invention. It will thus be appreciated that those skilled in the art will be able to devise various arrangements that, although not explicitly described or shown herein, embody the principles of the present invention and are included within its scope. Furthermore, all examples recited herein are principally intended expressly to be only for pedagogical purposes to aid the reader in understanding the principles of the present invention and the concepts contributed by the inventor(s) to furthering the art, and are to be construed as being without limitation to such specifically recited examples and conditions. Moreover, all statements herein reciting principles, aspects, and embodiments of the present invention, as well as specific examples thereof, are intended to encompass equivalents thereof.

The functions of the various elements shown in the figures, including any functional blocks labelled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the present invention. Similarly, it will be appreciated that any flowcharts, flow diagrams, state transition diagrams, pseudo code, and the like represent various processes which may be substantially represented in computer readable medium and so executed by a computer.

It should be noted that the above-mentioned embodiments illustrate rather than limit the present invention and that those skilled in the art will be able to design alternative embodiments without departing from the scope of the appended claims. In the claims, any reference signs placed between parentheses shall not be construed as limiting the claim. The word "comprising" does not exclude the presence of elements or steps not listed in a claim. The word "a" or "an" preceding an element does not exclude the presence of a plurality of such elements. The present invention can be implemented by means of hardware comprising several distinct elements and by means of a suitably programmed computer. In claims enumerating several means, several of these means can be embodied by one and the same item of hardware. The usage of the words "first", "second", "third", etc. does not indicate any ordering or priority. These words are to be interpreted as names used for convenience.

In the present invention, expressions such as "comprise", "include", "have", "may comprise", "may include", or "may have" indicate existence of corresponding features but do not exclude existence of additional features.

Whilst the principles of the present invention have been set out above in connection with specific embodiments, it is to be understood that this description is merely made by way of example and not as a limitation of the scope of protection which is determined by the appended claims.

**Claims**

1. A control method for controlling a multi-user altered reality, AR, application, wherein a reference user has user access rights to at least one AR reference object, the control method comprising:

    - determining, for the reference user, from among users of the AR application, at least one relevant user based on at least a first user relevance criterion;
    - determining, from among the at least one reference AR objects, at least one relevant AR object based on at least a first object relevance criterion;
    - obtaining access rights regarding the at least one relevant user and the at least one relevant AR object;
    - determining a mapping model based on at least one of: the at least one relevant AR object, the at least one relevant user, and the obtained access rights; and
    - indicating to the reference user, by means of at least one perceptual indicator, the access rights regarding the at least one relevant user and the at least one relevant AR object based on the determined mapping model;

    wherein the mapping model is representative for a mapping between the obtained access rights and the at least one perceptual indicator.

2. The control method according to claim 1, wherein determining at least one relevant user comprises:

    - obtaining object access rights of the at least one relevant AR object, wherein the object access rights are representative for users having access to the respective relevant AR object; and
    - determining that a user is a relevant user if the user has access to the respective relevant AR object.

3. The control method according to claim 1 or 2, wherein determining at least one relevant AR object comprises:

    - obtaining user access rights of the at least one relevant user, wherein the user access rights are representative for AR reference objects which can be accessed by the respective relevant user; and
    - determining that an AR reference object is a relevant AR object if the AR reference object can be accessed by the respective relevant user.

4. The control method according to any one of the preceding claims, wherein:

    - determining the at least one relevant user comprises determining a plurality of relevant users;
    - obtaining access rights comprises obtaining user access rights of each relevant user of the plurality of relevant users;
    - determining the mapping model comprises determining at least one user group by grouping each relevant user of the plurality of relevant users in a corresponding user group based on the user access rights of the respective relevant user; and
    - the mapping model is representative for a mapping between the at least one user group and the at least one perceptual indicator.

5. The control method according to claim 4, wherein grouping relevant users in a corresponding user group comprises grouping relevant users having the same user access rights in the same user group.

6. The control method according to claim 4, wherein grouping relevant users in a corresponding user group comprises grouping a relevant user in a first user group when the respective relevant user has access to each relevant AR object, and grouping the respective relevant user in a second group when the respective relevant user has no access to at least one relevant AR object.

7. The control method according to any one of the preceding claims, wherein:

    - determining the at least one relevant AR object comprises determining a plurality of relevant AR objects;
    - obtaining access rights comprises obtaining object access rights of each relevant AR object of the plurality of relevant AR objects;
- determining the mapping model comprises determining at least one object group by grouping each relevant AR object of the plurality of relevant AR objects in a corresponding object group based on the object access rights of the respective relevant AR object; and
- the mapping model is representative for a mapping between the at least one object group and the at least one perceptual indicator.

8. The control method according to claim 7, wherein grouping relevant AR objects in a corresponding object group comprises grouping relevant AR objects having the same object access rights in the same object group.

9. The control method according to claim 7, wherein grouping relevant AR objects in a corresponding object group comprises grouping a relevant AR object in a first object group when each relevant user has access to the relevant AR object, and grouping the respective relevant AR object in a second group when at least one relevant user has no access to the respective relevant AR object.

10. The control method according to any one of the preceding claims, wherein the at least one perceptual indicator comprises at least one of: a visual indicator, an auditory indicator, and a tactile indicator.

11. The control method according to any one of the preceding claims, wherein the first user relevance criterion comprises at least one of: a distance between the respective user and the reference user, a user access right of the respective user, a relation of the respective user to the reference user, and a probability of interaction between the respective user and the reference user.

12. The control method according to any one of the preceding claims, wherein the first object relevance criterion comprises at least one of: a distance between the respective AR object and the reference user, an object access right of the AR object, a relation of the respective AR object to the reference user, and a probability of interaction between the reference user and the respective AR object.

13. The control method according to any one of the preceding claims, wherein the user access rights comprise at least one of: see, read, interact, write, delete, and change.

14. A control system for controlling a multi-user altered reality, AR, application, wherein a reference user has user access rights to at least one AR reference object, the control system comprising:

- means for determining, for the reference user, from among users of the AR application, at least one relevant user based on at least a first user relevance criterion;
- means for determining, from among the at least one reference AR objects, at least one relevant AR object based on at least a first object relevance criterion;
- means for obtaining access rights regarding the at least one relevant user and the at least one relevant AR object;
- means for determining a mapping model based on at least one of: the at least one relevant AR object, the at least one relevant user, and the obtained access rights; and
- means for indicating to the reference user, by means of at least one perceptual indicator, the access rights regarding the at least one relevant user and the at least one relevant AR object based on the determined mapping model;

wherein the mapping model is representative for a mapping between the obtained access rights and the at least one perceptual indicator.

15. A computer program product comprising a computer-executable program of instructions for performing, when executed on a computer, the steps of the method of any one of claims 1-13.

**Amended claims in accordance with Rule 137(2) EPC.**

1. A control method for controlling a multi-user altered reality, AR, application, wherein a reference user has user access rights to at least one AR reference object, the control method comprising:

- determining (210a), for the reference user, from among users of the AR application, at least one relevant user based on at least a first user relevance criterion;
- determining (210b), from among the at least one reference AR objects, at least one relevant AR object based on at least a first object relevance criterion;
- obtaining (220) access rights regarding the at least one relevant user and the at least one relevant AR object;

**characterized in that** the control method further comprises:

- determining (230) a mapping model based on at least one of: the at least one relevant AR object, the at least one relevant user, and the obtained access rights; and
- indicating (240) to the reference user, by means of at least one perceptual indicator, the access rights regarding the at least one relevant user and the at least one relevant AR object based on the determined mapping model;

wherein the mapping model is representative for a mapping between the obtained access rights and the at least one perceptual indicator.

2. The control method according to claim 1, wherein determining at least one relevant user comprises:

- obtaining (311) object access rights of the at least one relevant AR object, wherein the object access rights are representative for users having access to the respective relevant AR object; and
- determining (313a) that a user is a relevant user if the user has access to the respective relevant AR object.

3. The control method according to claim 1, wherein determining at least one relevant AR object comprises:

- obtaining (311b) user access rights of the at least one relevant user, wherein the user access rights are representative for AR reference objects which can be accessed by the respective relevant user; and
- determining (313b) that an AR reference object is a relevant AR object if the AR reference object can be accessed by the respective relevant user.

4. The control method according to any one of the preceding claims, wherein:

- determining the at least one relevant user comprises determining (410b) a plurality of relevant users;
- obtaining (420) access rights comprises obtaining user access rights of each relevant user of the plurality of relevant users;
- determining (430) the mapping model comprises determining at least one user group by grouping each relevant user of the plurality of relevant users in a corresponding user group based on the user access rights of the respective relevant user; and
- the mapping model is representative for a mapping between the at least one user group and the at least one perceptual indicator.

5. The control method according to claim 4, wherein grouping relevant users in a corresponding user group comprises grouping relevant users having the same user access rights in the same user group.

6. The control method according to claim 4, wherein grouping relevant users in a corresponding user group comprises grouping a relevant user in a first user group when the respective relevant user has access to each relevant AR object, and grouping the respective relevant user in a second group when the respective relevant user has no access to at least one relevant AR object.

7. The control method according to any one of the preceding claims, wherein:

- determining the at least one relevant AR object comprises determining (410a) a plurality of relevant AR objects;
- obtaining (420') access rights comprises obtaining object access rights of each relevant AR object of the plurality of relevant AR objects;
- determining (430) the mapping model comprises determining at least one object group by grouping each relevant AR object of the plurality of relevant AR objects in a corresponding object group based on the object access rights of the respective relevant AR object; and
- the mapping model is representative for a mapping between the at least one object group and the at least one perceptual indicator.

8. The control method according to claim 7, wherein grouping relevant AR objects in a corresponding object group comprises grouping relevant AR objects having the same object access rights in the same object group.

9. The control method according to claim 7, wherein grouping relevant AR objects in a corresponding object group comprises grouping a relevant AR object in a first object group when each relevant user has access to the relevant AR object, and grouping the respective relevant AR object in a second group when at least one relevant user has no access to the respective relevant AR object.

10. The control method according to any one of the preceding claims, wherein the at least one perceptual indicator comprises at least one of: a visual indicator, an auditory indicator, and a tactile indicator.

11. The control method according to any one of the preceding claims, wherein the first user relevance criterion comprises at least one of: a distance between the respective user and the reference user, a user access right of the respective user, a relation of the respective user to the reference user, and a probability of interaction between the respective user and the reference user.

12. The control method according to any one of the preceding claims, wherein the first object relevance criterion comprises at least one of: a distance between the respective AR object and the reference user, an object access right of the AR object, a relation of the respective AR object to the reference user, and a probability of interaction between the reference user and the respective AR object.

13. The control method according to any one of the preceding claims, wherein the user access rights comprise at least one of: see, read, interact, write, delete, and change.

14. A control system for controlling a multi-user altered reality, AR, application, wherein a reference user has user access rights to at least one AR reference object, the control system comprising:

- means (910a) for determining, for the reference user, from among users of the AR application, at least one relevant user based on at least a first user relevance criterion;
- means (910b) for determining, from among the at least one reference AR objects, at least one relevant AR object based on at least a first object relevance criterion;
- means (920) for obtaining access rights regarding the at least one relevant user and the at least one relevant AR object;
- means (930) for determining a mapping model based on at least one of: the at least one relevant AR object, the at least one relevant user, and the obtained access rights; and
- means (940) for indicating to the reference user, by means of at least one perceptual indicator, the access rights regarding the at least one relevant user and the at least one relevant AR object based on the determined mapping model;

wherein the mapping model is representative for a mapping between the obtained access rights and the at least one perceptual indicator.

15. A computer program product comprising a computer-executable program of instructions for performing, when executed on a computer, the steps of the method of any one of claims 1-13.

Fig.1A

Fig.1B

Fig.1C

DETERMINING
RELEVANT USER(S)

210a

DETERMINING
RELEVANT AR
OBJECT(S)

210b

220

OBTAINING
ACCESS RIGHTS

230

DETERMINING
MAPPING
MODEL

240

INDICATING ACCESS
RIGHTS TO
REFERENCE USER

Fig.2

210b

311a

OBTAINING
OBJECT ACCESS RIGHTS
OF RELEVANT AR
OBJECTS

312a

YES | USER HAS ACCESS
TO RELEVANT
AR OBJECTS | NO

USER
IS RELEVANT
USER

313a

USER IS
NOT RELEVANT
USER

314a

220

230

240

Fig.3A

Fig.3B

Fig.4

Fig.5

Fig.6

(1)

(2)

(3)

Fig.7

"Indicated objects are
shared MR objects"

Fig.8

910a

RELEVANT USER
DETERMINING
UNIT

920

ACCES RIGHTS
OBTAINING
UNITS

910b

RELEVANT
AR OBJECT
DETERMINING
UNIT

930

MAPPING
UNIT

940

INDICATING
UNIT

900

Fig.9

Europäisches
Patentamt

European
Patent Office

Office européen
des brevets

# EUROPEAN SEARCH REPORT

Application Number

EP 18 19 1245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/039770 A1 (LANIER JARON [US] ET AL) 9 February 2017 (2017-02-09) <br> * figure 1 * <br> * paragraph [0036] - paragraph [0037] * <br> * paragraph [0075] - paragraph [0078] * <br> ----- | 1-15 | INV. <br> G06F3/01 <br> G06T19/00 <br> G06F21/62 <br> H04L29/06 |
| X | US 2014/368537 A1 (SALTER TOM G [US] ET AL) 18 December 2014 (2014-12-18) <br> * figure 1 * <br> * figure 8 * <br> * paragraph [0002] - paragraph [0005] * <br> * paragraph [0080] - paragraph [0082] * <br> ----- | 1-15 | |
| A | US 2012/210254 A1 (FUKUCHI MASAKI [JP] ET AL) 16 August 2012 (2012-08-16) <br> * figure 1A * <br> * paragraph [0079] * <br> ----- | 1-15 | |

**TECHNICAL FIELDS SEARCHED (IPC)**

G06F
G06T
H04L

The present search report has been drawn up for all claims

| Place of search | Date of completion of the search | Examiner |
|---|---|---|
| Munich | 6 December 2018 | Caragata, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 18 19 1245

This annex lists the patent family members relating to the patent documents cited in the above-mentioned European search report.
The members are as contained in the European Patent Office EDP file on
The European Patent Office is in no way liable for these particulars which are merely given for the purpose of information.

06-12-2018

| Patent document cited in search report | | | Publication date | Patent family member(s) | | | Publication date |
|---|---|---|---|---|---|---|---|
| US 2017039770 | A1 | | 09-02-2017 | CN | 107852573 | A | 27-03-2018 |
| | | | | EP | 3332565 | A1 | 13-06-2018 |
| | | | | US | 2017039770 | A1 | 09-02-2017 |
| | | | | WO | 2017027183 | A1 | 16-02-2017 |
| US 2014368537 | A1 | | 18-12-2014 | AU | 2014281863 | A1 | 17-12-2015 |
| | | | | BR | 112015031216 | A2 | 25-07-2017 |
| | | | | CA | 2914012 | A1 | 24-12-2014 |
| | | | | CN | 105393158 | A | 09-03-2016 |
| | | | | EP | 3011382 | A1 | 27-04-2016 |
| | | | | JP | 2016525741 | A | 25-08-2016 |
| | | | | KR | 20160021126 | A | 24-02-2016 |
| | | | | RU | 2015154101 | A | 22-06-2017 |
| | | | | US | 2014368537 | A1 | 18-12-2014 |
| | | | | WO | 2014204756 | A1 | 24-12-2014 |
| US 2012210254 | A1 | | 16-08-2012 | CN | 102695032 | A | 26-09-2012 |
| | | | | JP | 5776201 | B2 | 09-09-2015 |
| | | | | JP | 2012168646 | A | 06-09-2012 |
| | | | | US | 2012210254 | A1 | 16-08-2012 |

EPO FORM P0459

For more details about this annex : see Official Journal of the European Patent Office, No. 12/82